## Europäisches Patentamt

## European Patent Office

## Office européen des brevets

(11) Veröffentlichungsnummer: **0 239 886**
**B1**

(12) **EUROPÄISCHE PATENTSCHRIFT**

(45) Veröffentlichungstag der Patentschrift:
**11.10.89**

(51) Int. Cl.⁴: **B05B 7/14,** B01F 3/06,
B05C 19/00

(21) Anmeldenummer: **87104086.1**

(22) Anmeldetag: **20.03.87**

(54) **Fluidisiereinrichtung.**

(30) Priorität: **02.04.86 DE 3611039**

(43) Veröffentlichungstag der Anmeldung:
**07.10.87 Patentblatt 87/41**

(45) Bekanntmachung des Hinweises auf die Patenterteilung:
**11.10.89 Patentblatt 89/41**

(84) Benannte Vertragsstaaten:
**BE CH DE FR GB IT LI LU NL SE**

(56) Entgegenhaltungen:
**DE-A- 3 300 228**
**DE-B- 1 750 626**
**FR-A- 2 153 888**
**US-A- 3 109 680**
**US-A- 4 018 185**

(73) Patentinhaber: **WAGNER INTERNATIONAL AG,
Industriestrasse 22, CH-9450 Altstätten(CH)**

(72) Erfinder: **Rese, Arkadijus, Waertergut 1,,
CH-9477 Truebbach(CH)**

(74) Vertreter: **Münzhuber, Robert, Dipl.-Phys., Patentanwalt
Rumfordstrasse 10, D-8000 München 5(DE)**

ACTORUM AG

## Beschreibung

Die Erfindung betrifft eine Fluidisiereinrichtung für Pulverbeschichtungsgeräte gemäß dem Oberbegriff des Patentanspruchs 1. Eine solche Einrichtung ist aus der US-A 4 018 185 bekannt.

Die bekannten und auf dem Markt befindlichen Fluidisiereinrichtungen zum Aufbereiten eines Pulver-Luft-Gemisches und Fördern desselben, etwa über eine Schlauchleitung, zu einem Pulver-Beschichtungsgerät, also einer Pulverpistole, weisen ein Gehäuse auf, das durch eine horizontale Wand aus porösem Material, etwa Filtermaterial, unterteilt wird, wobei das über der porösen Trennwand befindliche Pulver durch von unten durch die poröse Trennwand hindurchgeleitete Druckluft aufgewirbelt und in einen Schwebezustand versetzt wird. Das oberhalb der porösen Trennwand befindliche "fluidisierte" Pulver wird dann mittels eines Injektors aus dem oberen Gehäuseteil abgezogen und über die Schlauchleitung zur Pulverpistole gefördert. Ein Nachteil der bekannten derartigen Fluidisiereinrichtungen besteht darin, daß sie vergleichsweise groß, schwer und aufwendig sind, und daß es trotz der Aufwirbelluft zu einer Klumpenbildung des Pulvers kommen kann, insbesondere während der Beschichtungspausen.

Aufgabe der vorliegenden Erfindung ist es deshalb, Fluidisiereinrichtungen dieser Bauart so zu verbessern, daß sie vergleichsweise klein, handlich und einfach im Aufbau sind, wobei jedoch ein ausgezeichneter Fluidisiereffekt ohne die Gefahr einer Klumpenbildung gewährleistet sein soll. Die Lösung dieser Aufgabe ergibt sich aus den kennzeichnenden Merkmalen des Patentanspruchs 1.

Bei der erfindungsgemäßen Einrichtung befindet sich also im unteren Gehäuseteil eine eine Unwucht aufweisende Luftturbine, deren Abluft als Fluidisierluft dient und die das gesamte Gehäuse in Vibrationen versetzt. Das Pulver wird also nicht nur durch die Druckluft fluidisiert sondern durch die erwähnten Vibrationen mechanisch aufgelockert, sodaß es zu keinen Klumpenbildungen kommen kann. Durch die Ausbildung des unteren Gehäuseteils als Kreiszylinder und des oberen Gehäuseteils als Würfel ergeben sich im oberen Gehäuseteil Eckbereiche, die nicht von unten her mit Druckluft angeströmt werden und die, wie Versuche ergeben haben, Bereiche besonders gleichmäßiger Fluidisierung ergeben. Trotz dieser funktionsmäßigen Vorteile ist die erfindungsgemäße Einrichtung vergleichsweise einfach im Aufbau, klein in ihren Abmessungen und leicht zu handhaben.

Besonders zweckmäßige Ausgestaltungen der Erfindung sind in den Unteransprüchen gekennzeichnet.

Auf der Zeichnung zeigen:

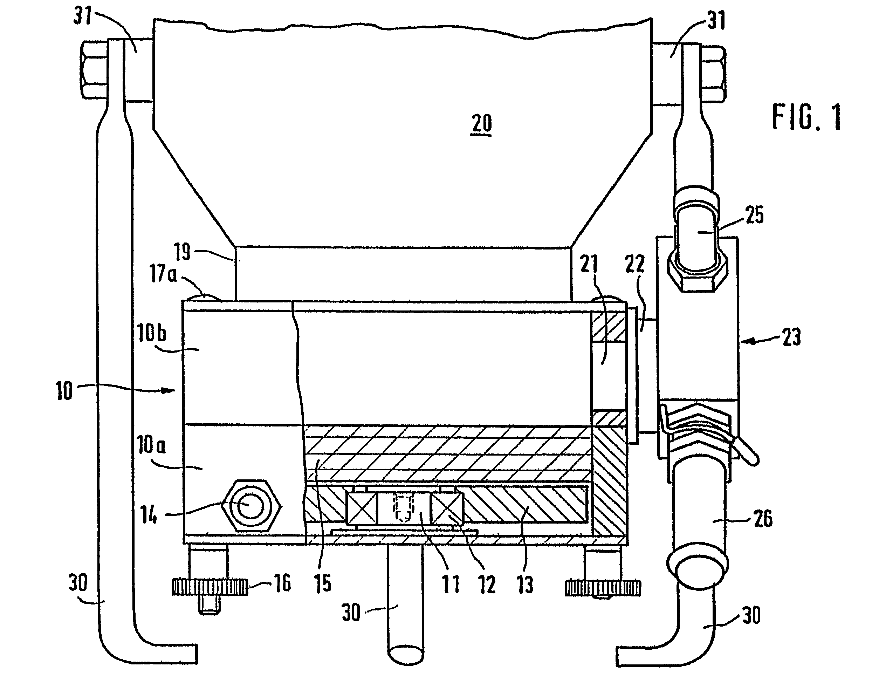

Fig. 1 die Einrichtung in Vorderansicht, teilweise geschnitten, und

Fig. 2 eine Draufsicht, teilweise im Schnitt, auf die Einrichtung von Fig. 1, wobei der Pulverbehälter und der Gehäusedeckel sowie teilweise die Filtermatte weggenommen sind.

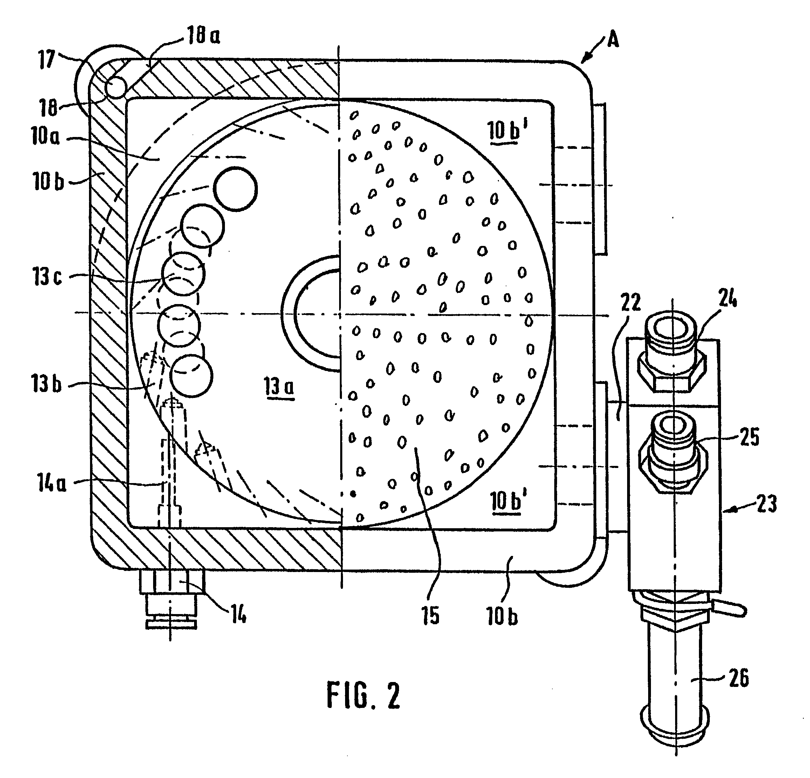

Die Einrichtung weist als Hauptkörper ein Gehäuse 10 auf, bestehend aus zwei übereinander angeordneten Gehäuseteilen, nämlich einem unteren Gehäuseteil 10a und einem oberen Gehäuseteil 10b. Der untere Gehäuseteil 10a ist kreiszylindrisch, d.h., seine innere Bodenfläche hat die Form einer Kreisscheibe. Auf einer zentral vom Boden des unteren Gehäuseteils 10a abstehenden Vertikalachse 11 ist mittels Lager 12 eine Luftturbine 13 drehbar gelagert. Die Luftturbine 13 besteht aus einem Rotor 13a in Form einer Ringscheibe, deren Umfangskante mit schräg angestellten Einströmöffnungen 13b und deren Oberfläche auf einem Sektorbereich mit Unwucht-Ausnehmungen 13c versehen ist. Mit 14 ist ein Druckluftanschluß bezeichnet, dessen Blasdüse 14a auf die Kante des Rotors 13a gerichtet ist, derart, daß die Düsenachse mit der Achse der gerade davor befindlichen Ein strömöffnung 13b im wesentlichen fluchtet. Auf seiner Oberseite ist der untere Gehäuseteil 10a mit einer ihn abschließenden Filtermatte 15 versehen, die beim Ausführungsbeispiel mehrschichtig ausgebildet ist. Von der unteren Bodenseite des unteren Gehäuseteils 10a stehen zwei Rändelmuttern 16 nach unten ab, die auf zwei einander diagonal gegenüberliegende Schrauben 17 aufgeschraubt sind, wobei die Schrauben 17 durch die vertikale Seitenwand des unteren Gehäuseteils 10a hindurchgeführt sind und über eine Länge nach oben abstehen, welche der Höhe des oberen Gehäuseteils 10b entspricht; die oberen freien Enden der Schrauben 17 sind als nietenartige Schraubenköpfe 17a ausgebildet. Der obere Gehäuseteil 10b hat die Form eines Quaders mit quadratischer Bodenfläche, wobei die Länge einer Quaderseite gleich dem Durchmesser der Bodenfläche des unteren Gehäuseteils 10a ist. An gegenüberliegenden Ecken besitzt der obere Gehäuseteil 10b vertikale Bohrungen 18 mit seitlichem Öffnungsschlitz 18a, derart, daß der obere Gehäuseteil 10b in Richtung des in Fig. 2 mit A bezeichneten Pfeils auf den unteren Gehäuseteil 10a aufgeschoben werden kann, wobei dann die beiden nach oben abstehenden Schraubenlängen der Schrauben 17 in die Bohrungen 18 gleiten, worauf durch Anziehen der Rändelmuttern 16 eine feste Verbindung zwischen oberem und unterem Gehäuseteil herbeigeführt wird. Die Bodenfläche 10b' des oberen Gehäuseteils 10b ist kreisrund ausgeschnitten, wobei der Ausschnittsdurchmesser im wesentlichen gleich dem Durchmesser der Filtermatte 15 ist, sodaß der Innenraum des unteren Gehäuseteils 10a mit dem Innenraum des oberen Gehäuseteils 10b über die Filtermatte 15 in Verbindung steht. Der obere Gehäuseteil 10b ist mit einem ebenfalls quadratischen Deckel versehen, der mittels der Schrauben 17 gegen den oberen Gehäuseteil 10b bzw. das Gehäuse 10 verspannt ist. Der Deckel steht dabei über einen zylindrischen Teil 19 mit dem Gehäuse des Pulverbechers 20, dessen oberer Bereich in der Zeichnung weggeschnitten ist, in Verbindung. Schließlich weist der obere Gehäuseteil 10b eine seitliche Öffnung 21 auf, die mit dem Einlaß 22 eines an das Gehäuse 10 angeflanschten, im ganzen mit 23 bezeichneten Injektors in Verbindung steht. Der Injektor 23 bildet einen Einlaß 24 für Injektorluft, einen Einlaß 25 für Leer-

lauluft und einen Auslaß 26 für das Pulver-Luft-Gemisch. Die im Inneren des Injektors 23 befindliche, mit den Einlässen 24 und 25 verbundene Injektordüse ist auf der Zeichnung nicht dargestellt. Am oberen Gehäuseteil 10b können mehrere solcher Injektoren 23 angebracht sein, maximal vier, und zwar in der aus Fig. 2 verständlichen Anordnung.

Die aus Gehäuse 10, Pulverbehälter 20 und Injektor 23 bestehende Einheit ist in einem nur skizzenhaft dargestellten, vierbeinigen Gestell 30 elastisch gelagert, wobei mit 31 Gummipuffer bezeichnet sind.

Wird über den Druckluftanschluß 14 Druckluft zugeführt und von der Düse 14a gegen den Turbinenrotor 13a gerichtet, dann setzt sich dieser in Umdrehung, wobei die Umdrehungszahl von der Stärke des Druckluftstrahls abhängt. Durch die Drehung des Turbinenrotors 13a, der ja infolge der Ausnehmungen 13c eine Unwucht aufweist, entstehen mechanische Vibrationen, die sich über das Lager 12 und die Achse 11 auf das gesamte, im Gestell 30 elastisch gelagerte Gehäuse 10 übertragen. Eine weitere Folge der Druckluftzufuhr ist, daß diese als Abluft der Luftturbine 13 durch die Filtermatte 15 hindurch nach oben in das Innere des oberen Gehäuseteils 10b strömt. Auss dem Pulverbehälter 20 in den Innenraum des oberen Gehäuseteils 10b gefallenes und diesen anfüllendes Pulver wird nun zum einen durch die Vibrationsbewegugungen aufgelockert und zum anderen durch die aus der Oberfläche der Filtermatte 15 ausströmende Luft in einen Schwebezustand gebracht (fluidisiert). Dieser Fluidisierungszustand bildet sich insbesondere in den Ecken des oberen Gehäuseteils 10b aus, also überraschenderweise über den stehengebliebenen Eckbereichen des Bodens 10b'. Der Grund dafür dürfte zum einen in Turbulenzen der Luft liegen und zum anderen darin, daß über diesen Bereichen keine Pulversäule des Behälters 20 steht. Aus diesem Grund sind auch die Auslaßöffnungen 21 und die Anschlüsse 22 der Injektoren 23 so angeordet, daß sie von diesen Eckbereichen starker Fluidisierung abgehen. Wird nämlich nun Druckluft über die Leitung 24 dem Injektor zugeführt, dann wird fluidisiertes Pulver, also ein Pulver-Luft-Gemisch mit gleichmäßig in der Luft verteiltem Pulver durch die Injektorwirkung aus dem erwähnten Eckbereich durch die Öffnung 21 und den Anschluß 22 hindurch angesaugt und dem Auslaßanschluß 26 zugeführt, von welchem es über eine nicht-gezeichnete Leitung, vorzugsweise Schlauchleitung, einem ebenfalls nicht-gezeichneten Sprühgerät zugeführt wird. Dabei kann die Durchsatzmenge an Pulver-Luft-Gemisch durch die Druckluftzufuhr zum Einlaß 24 gesteuert werden.

Bei Unterbrechungen des Sprühvorganges des Sprühgerätes, also in den Sprühpausen, kann so vorgegangen werden, daß zugleich mit dem Schließen des üblichen Ventils des Sprühgeräts ein Ventil für die Druckluftzufuhr zum Anschluß 14 und ein Ventil für die Druckluftzufuhr zum Anschluß 24 geschlossen werden, etwa dadurch, daß alle drei Ventile als entsprechend miteinander verbundene Magnetventile ausgebildet sind. Dabei könnte es jedoch zu einer Klumpenbildung des Pulvers im oberen Gehäuseteil 10b, im Injektor 23 und in dem Anschlußschlauch zum Sprühgerät kommen. Um dies zu verhindern wird vorteilhafterweise so vorgegangen, daß mit dem Schließen des Ventils des Sprühgeräts zugleich die Druckluftzufuhr zum Anschluß 14 vermindert, das Ventil zum Anschluß 241 geschlossen und ein Ventil zum Leerlaufanschluß 25 geöffnet wird. Das heißt, auch bei geschlossenem Sprühgerät wird eine vergleichsweise geringe Druckluftmenge in den unteren Gehäuseteil 10a eingeleitet, sodaß sich die Luftturbine 13 langsam dreht und somit das Gehäuse 10 schwach vibriert und auch eine verminderte Fluidisierungswirkung aufrechterhalten bleibt. Durch die dem kleinen Anschluß 25 zugeführte Druckluft wird aber verhindert, daß fluidisiertes Pulver in den Injektor und den Anschlußschlauch zum Sprühgerät gelangt, vielmehr wird sich ein Druckgleichgewicht zwischen Innenraum des oberen Gehäuseteils 10b, Injektor 23 und dem Anschlußschlauch ausbilden. Überschüssige Luft wird über den Pulverbehälter 20 nach außen austreten. Bei erneutem Öffnen des Ventils des Sprühgeräts kann dann sofort wieder voll fluidisiert werden.

Selbstverständlich kann die Erfindung zahlreiche Abwandlungen erfahren. So ist es beispielsweise möglich, anstelle der Unwucht-Ausnehmungen 13c, den Rotor exzentrisch zu lagern. Auch die Verbindung von unterem Gehäuseteil 10a, oberem Gehäuseteil 10b mit Deckel und Pulverbehälter 20 kann konstruktiv in anderer Weise erfolgen.

## Patentansprüche

1. Fluidisiereinrichtung für Pulver-Beschichtungsgeräte mit einem Gehäuse, das durch eine poröse Trennwand horizontal in einen oberen und einen unteren Gehäuseteil unterteilt ist, mit einer Druckluftzuführung für den unteren, als runder Zylinder ausgebildeten Gehäuseteil und mit einer Pulverzuführung für den oberen Gehäuseteil, dessen Boden gleich groß der porösen Trennwand ist, wobei vom oberen Gehäuseteil eine Anschlußleitung zu einem mit Druckluft gespeisten Injektor abgeht, der aus dem oberen Gehäuseteil ein Pulver-Luft-Gemisch abzieht und zum Pulver-Beschichtungsgerät fördert, und wobei der untere Gehäuseteil mit einem Vibrator verbunden ist, dadurch gekennzeichnet, daß der untere Gehäuseteil (10a) eine eine Unwucht aufweisende Luftturbine (13) aufnimmt deren Abluft als Fluidisierluft dient und das gesamt Gehäuse (10) in Vibration versetzt, und seine Deckwand eine Filtermatte (15) ist, und daß der obere Gehäuseteil (10b) als Würfel ausgebildet ist, an seinem Boden (10b') einen runden Ausschnitt gleich der Größe der Filtermatte (15) aufweist und deckenseitig mit dem offenen Boden eines Pulverbehälters (20) verbunden ist.

2. Fluidisiereinrichtung nach Anspruch 1, dadurch gekennzeichnet, daß das Gehäuse (10) in einem Gestell (30) elastisch gelagert ist.

3. Fluidisiereinrichtung nach Anspruch 1 oder 2, dadurch gekennzeichnet, daß die Luftturbine (13) ein auf einer vertikalen Achse (11) gelagerter, scheibenförmiger Rotor (13a) ist, dessen Umfangskante mit schräg angestellten Einströmöffnungen (13b) versehen ist.

4. Fluidisiereinrichtung nach Anspruch 3, dadurch gekennzeichnet, daß der Rotor (13a) auf einem Sektor seiner Oberfläche mit Unwucht-Ausnehmungen (13c) versehen ist.

5. Fluidisiereinrichtung nach Anspruch 3, dadurch gekennzeichnet, daß der Rotor (13) auf seiner Achse (11) exzentrisch gelagert ist.

6. Fluidisiereinrichtung nach einem der Ansprüche 1-5, dadurch gekennzeichnet, daß die Filtermatte (15) mehrschichtig ist.

7. Fluidisiereinrichtung nach einem der Ansprüche 1-6, dadurch gekennzeichnet, daß der obere Gehäuseteil durch einen Deckel abgedeckt ist, der über einen zylindrischen Teil (19) mit dem Pulverbehälter (20) verbunden ist.

8. Fluidisiereinrichtung nach einem der Ansprüche 1-7, dadurch gekennzeichnet, daß unterer und oberer Gehäuseteil (10a, 10b) mittels die Außenwände durchsetzender Schrauben (17) mit aufgesetzten Rändelmuttern (16) gegeneinander verspannt sind.

9. Fluidisiereinrichtung nach einem der Ansprüche 1-8, dadurch gekennzeichnet, daß die zum Injektor (23) führende Anschlußleitung (21, 22) von einem Eckenbereich des oberen Gehäuseteils (10b) abgeht.

10. Fluidisiereinrichtung nach Anspruch 9, dadurch gekennzeichnet, daß dem Gehäuse (10) zwei bis vier Anschlußleitungen (21, 22) mit Injektor (23) zugeordnet sind.

11. Fluidisiereinrichtung nach einem der Ansprüche 1-10, dadurch gekennzeichnet, daß der Injektor eine zusätzliche Druckluftzuführleitung (25) für den Leerlaufbetrieb aufweist.

## Claims

1. Fluidiser for powder coating appliances with a housing which is divided by a horizontal porous dividing wall into an upper and a lower housing part, with an air supply for the lower housing part, embodied as a round cylinder, and with a powder supply for the upper housing part, the floor of which is the same size as the porous dividing wall, and where a connecting pipe leads out of the upper housing part to an injector fed with compressed air, which draws a powder-air mixture out of the upper housing part and transfers it to the powder coating appliance, and where the lower housing part is connected to a vibrator, characterised in that the lower housing part (10a) contains an unbalanced air turbine (13), the spent air of which serves as fluidising air and couses the entire housing (10) to vibrate, and that its ceiling wall is a filter mat (15), and that the upper housing part (10b) is designed as a cube, has a circular area the same size as the filter mat (15) cut out of its floor (10b'), and is connected on the ceiling side to the open floor of a powder receptacle (20).

2. Fluidiser according to Claim 1, characterised in that the housing (10) is flexibly supported in a frame (30).

3. Fluidiser according to Claim 1 or 2, characterised in that the air turbine (13) is a disc-shaped rotor, which is placed on a vertical shaft (11), and the circumference edge of which is provided with diagonally-positioned inlet openings (13b).

4. Fluidiser according to Claim 3, characterised in that the rotor (13a) is provided on one section of its upper surface with unbalanced recesses (13c).

5. Fluidiser according to Claim 3, characterised in that the rotor (13) is situated off-balance on its shaft (11).

6. Fluidiser according to one of Claims 1-5, characterised in that the filter mat (15) comprises several layers.

7. Fluidiser according to one of Claims 1-6, characterised in that the upper housing part is covered with a lid which is connected to the powder receptacle (20) via a cylindrical part (19).

8. Fluidiser according to one of Claims 1-7, characterised in that the lower and upper housing parts (10a, 10b) are braced against each other by means of screws (17) which pass through the outer walls and are mounted with milled nuts (16).

9. Fluidiser according to one of Claims 1-8, characterised in that the connecting pipe (21, 22) leading to the injector (23) passes out from a corner area of the upper housing part (10b).

10. Fluidiser according to Claim 9, characterised in that two to four connecting pipes (21, 22) with injector (23) are attached to the housing (10).

11. Fluidiser according to one of Claims 1-10, characterised in that the injector has an additional compressed air supply pipe (25) for the idling operation.

## Revendications

1. Dispositif de fluidisation pour appareil d'enduction de poudre, comprenant un boîtier subdivisé horizontalement par une paroi de séparation poreuse en une partie de boîtier supérieure et une partie de boîtier inférieure, comprenant une amenée d'air sous pression pour la partie de boîtier inférieure constituée sous forme d'un cylindre rond et une amenée de poudre dans la partie de boîtier supérieure dont le fond est de dimension que la paroi de séparation poreuse, une conduite de raccordement destinée à un injecteur alimenté en air sous pression partant de la partie de boîtier supérieure, l'injecteur aspirant de la partie de boîtier supérieure un mélange de poudre et d'air et le dirigeant vers l'appareil d'enduction de poudre, et dans lequel la partie de boîtier inférieure est reliée à un vibrateur, caractérisé en ce que la partie de boîtier inférieure (10a) contient une turbine à air (13) présentant un balourd, dont l'air sortant sert d'air de fluidisation et fait vibrer l'ensemble du boîtier (10), et sa paroi de recouvrement est constituée par un mat de filtration (15), et en ce que la partie de boîtier supérieure (10b) est constituée sous forme d'un cube, comprend sur son fond (10b') une section ronde de dimension égale à celle du mat de filtration (15) et est reliée du côté du couvercle au fond ouvert d'un réceptacle à poudre (20).

2. Dispositif de fluidisation selon la revendication 1, caractérisé en ce que le boîtier (10) est monté élastiquement dans un support (33).

3. Dispositif de fluidisation selon la revendication 1 ou 2, caractérisé en ce que la turbine à air (13) est un rotor en forme de disque monté sur un axe vertical (11), rotor dont le bord périphérique est muni d'ouvertures d'entrée (13b) disposées en oblique.

4. Dispositif de fluidisation selon la revendication 3, caractérisé en ce que le rotor (13a) est muni d'évidements de balourd (13c) sur un secteur de sa surface.

5. Dispositif de fluidisation selon la revendication 3, caractérisé en ce que le rotor (13) est monté excentriquement sur son axe (11).

6. Dispositif de fluidisation selon l'une quelconque des revendications 1 à 5, caractérisé en ce que le mat de filtration (15) est à couches multiples.

7. Dispositif de fluidisation selon l'une quelconque des revendications 1 à 6, caractérisé en ce que la partie de boîtier supérieure est recouverte par un couvercle qui est relié au réceptacle à poudre (20) par une partie cylindrique (19).

8. Dispositif de fluidisation selon l'une quelconque des revendications 1 à 7, caractérisé en ce que les parties de boîtier inférieure et supérieure (10a, 10b) sont serrées l'une contre l'autre au moyen de boulons (17) traversant les parois externes et comprenant des écrous moletés ( 16) montés sur eux.

9. Dispositif de fluidisation selon l'une quelconque des revendications 1 à 8, caractérisé en ce que les conduites de raccordement (21, 22) allant à l'injecteur (23) partent d'une région de coin de la partie de boîtier supérieure (10b).

10. Dispositif de fluidisation selon la revendication 9, caractérisé en ce qu'il est associé au boîtier (10) deux à quatre conduites de raccordement (21, 22) avec un injecteur (23).

11. Dispositif de fluidisation selon l'une quelconque des revendications 1 à 10, caractérisé en ce que l'injecteur comprend une conduite d'amenée d'air sous pression additionnelle (25) pour son fonctionnement à vide.

FIG. 1

EP 0 239 886 B1

FIG. 2

EP 0 239 886 B1